# EUROPÄISCHE PATENTANMELDUNG

(11) **EP 0 666 639 A1**
(43) Veröffentlichungstag der Anmeldung: **09.08.1995**
(21) Anmeldenummer: 95890027.6
(22) Anmeldetag: 03.02.1995
(51) Int. Cl.: H02P 1/46

(54) **Verfahren und Vorrichtung zum Starten einer einphasigen Synchronmaschine**

(30) Priorität: 03.02.1994 AT 198/94
(71) Anmelder: Mühlegger, Werner Dr., A-8020 Graz, Steiermark (AT)
(72) Erfinder: Mühlegger, Werner Dr., A-8020 Graz, Steiermark (AT)
(74) Vertreter: Hehenberger, Reinhard, Dipl.-Ing.

(57) **Zusammenfassung**

Bei dem Verfahren und der Vorrichtung zum Starten einer einphasigen Synchronmaschine (1) werden der Rotorlagewinkel (2), die Rotordrehzahl und der Augenblickswert der Netzspannung (3) ermittelt. Diese Parameter werden in einer Zündschaltung (4) mit einem vorzugsweise empirisch ermittelten Zusammenhang zwischen Netzspannung, Rotorlage, Drehzahl und optimalem Zündzeitpunkt bzw. Zündwinkel verglichen, so daß aufgrund der ermittelten Parameter der optimale Zündzeitpunkt für einen Triac (5), der zwischen eine Wechselspannungsquelle und die Statorwicklung geschaltet ist, ermittelt. Durch entsprechendes Zünden des Triacs (5) werden nur jene Netzhalbwellen auf die Synchronmaschine (1) geschaltet, welche diese in die gewünschte Drehrichtung beschleunigen.

## Beschreibung

Die Erfindung betrifft ein Verfahren und eine Vorrichtung zum Starten einer einphasigen Synchronmaschine.

Aus der EP-A 574 823 ist eine Vorrichtung zum Starten eines Synchronmotors bekannt, bei dem der durch die Spule des Synchronmotors fließende Strom, die Lage und Polarität der Permanentmagnete des Rotors und die Polarität der Wechselstromquelle erfaßt wird, und aufgrund der ermittelten Daten ein Triac gezündet wird, der zwischen die Statorwindung des Motors und die Wechselstromquelle geschaltet ist. Mit der bekannten Vorrichtung kann der Synchronmotor in eine ausgewählte Drehrichtung gestartet werden.

Abgesehen davon, daß bei einphasigen Synchronmotoren die Drehrichtung beim Starten ohne besondere Einrichtungen nicht festgelegt ist, haben Motoren mit größerer Leistung oder größerem Trägheitsmoment generell auch Hochlaufprobleme beim direkten Zuschalten an das Netz, da der Motor bereits nach einer Netzperiode synchron mit dem Netz laufen muß.

Aufgabe der Erfindung ist es, ein Verfahren und eine Vorrichtung zur Verfügung zu stellen, die einen technisch einfacheren Aufbau und Betrieb bzw. Startvorgang eines einphasigen Synchronmotors erlauben.

Gelöst wird diese Aufgabe bei einem Verfahren zum Starten einer einphasigen Synchronmaschine, bei dem der Rotorlagewinkel und die Polarität der Netzspannung ermittelt wird und bei dem anhand der ermittelten Werte der Einschaltzeitpunkt eines Schaltelements, das beim Null-Durchgang des Netzstromes die Stromversorgung des Synchronmotors unterbricht, so ermittelt wird, daß ein Anlauf des Synchronmotors in die gewünschte Drehrichtung erfolgt, erfindungsgemäß dadurch, daß der Augenblickswert der Netzspannung ermittelt wird und daß der Einschaltzeitpunkt bzw. Zündwinkel des Schaltelementes aufgrund eines vorzugsweise empirisch ermittelten Zusammenhanges zwischen Netzspannung, Rotorlage und optimalem Zündzeitpunkt bzw. Zündwinkel bestimmt wird.

Diese Aufgabe wird weiters bei einer Vorrichtung zum Starten einer einphasigen Synchronmaschine mit einem Sensor für den Rotorlagewinkel, mit einer Einrichtung zum Ermitteln der Polarität der Netzspannung, mit einem Schaltelement, das in einer Leitung zwischen der Statorwicklung und der Wechselstromquelle angeordnet ist und das beim Null-Durchgang des Stromes die Leitung unterbricht, und mit einer Zündschaltung für das Schaltelement erfindungsgemäß dadurch gelöst, daß eine Einrichtung zum Ermitteln der Augenblickswerte der Netzspannung und ein Speicher vorgesehen ist, in dem ein vorzugsweise empirisch ermittelte Zusammenhang zwischen Netzspannung, Rotorlage und optimalem Zündzeitpunkt bzw. Zündwinkel gespeichert ist und daß die Zündschaltung anhand der ermittelten Werte der Netzspannung und des Rotorlagewinkels den Zündzeitpunkt bzw. Zündwinkel des Schaltelementes so wählt, daß ein Beschleunigen der Synchronmaschine in die gewünschte Drehrichtung erfolgt.

Mit dem erfindungsgemäßen Verfahren und der erfindungsgemäßen Vorrichtung ist ein zuverlässiges Starten und Betrieb einer einphasigen Synchronmaschine möglich, obwohl gegenüber der in der EP-A 574 823 beschriebenen Vorrichtung der technische Aufwand verringert wurde, da der Stromfluß durch die Synchronmaschine nicht mehr gemessen und bei der Steuerung berücksichtigt werden muß.

In einer bevorzugten Weiterbildung der Erfindung ist diese dadurch gekennzeichnet, daß die Drehzahl des Rotors ermittelt wird und daß der Einschaltzeitpunkt bzw. Zündwinkel des Schaltelements aufgrund eines vorzugsweise empirisch ermittelten Zusammenhanges zwischen Netzspannung, Rotorlage und optimalem Zündzeitpunkt bzw. Zündwinkel bestimmt wird. bzw. daß in der Zündschaltung ein vorzugsweise empirisch ermittelter Zusammenhang zwischen Netzspannung, Rotorlage, Drehzahl und optimalem Zündzeitpunkt und Zündwinkel gespeichert ist.

Durch diese Ausführungsform der Erfindung ist es möglich, den Einschaltzeitpunkt bzw. Zündzeitpunkt des Schaltelementes, vorzugsweise eines Triacs, den jeweiligen Verhältnissen, d.h. der augenblicklichen Netzspannung, der Rotorlage und der Drehzahl dem jeweiligen Synchronmotor entsprechend noch genauer zu steuern.

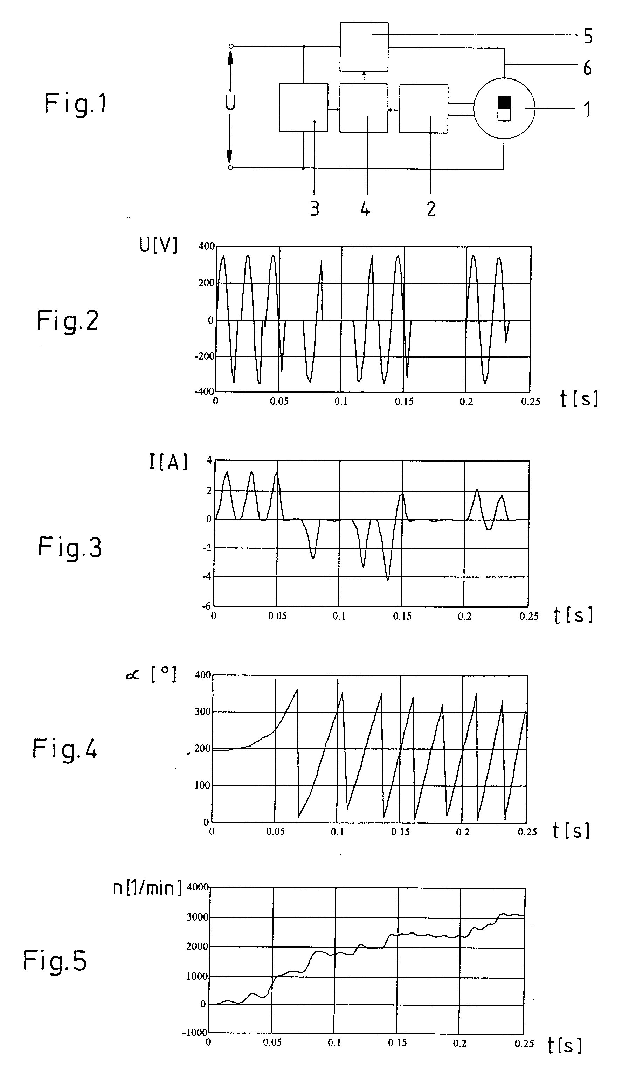

Weitere Merkmale und Vorteile der Erfindung ergeben sich aus den übrigen Unteransprüchen und der nachfolgenden Beschreibung eines Ausführungsbeispieles der Erfindung unter Bezugnahme auf die Zeichnungen. Es zeigt Fig. 1 ein Blockschaltbild der erfindungsgemäßen Vorrichtung, und die Fig. 2 bis 5 Diagramme des Verlaufes von Motorspannung, Motorstrom, Rotorlagewinkel und Drehzahl.

Die in Fig. 1 dargestellte Antriebseinheit weist einen einphasigen Synchronmotor 1 auf, der an einer Wechselspannungsquelle liegt und dessen Rotor vorzugsweise mit Permanentmagneten bestückt ist. Die Antriebseinheit weist weiters eine Meßeinrichtung 3 für die Augenblickswerte der Netzspannung, sowie eine Meßeinrichtung 2 für die Lage a des Rotors des Synchronmotors 1 auf. Die vom Netzspannungssensor 3 und vom Rotorlagesensor 2 ermittelten Werte werden einer Zündschaltung 4 zugeführt, die ein elektronisches Schaltelement 5, beispielsweise einen Triac oder zwei antiparallel geschaltete Thyristoren, ansteuern.

Da der Triac 5 nach dem Zünden beim Null-Durchgang des Stromes automatisch wieder nichtleitend wird, können immer nur bestimmte ausgewählte positive oder negative Halbwellen des Netzstromes im Synchronmotor 1 wirken, so daß dieser in eine bestimmte Drehrichtung beschleunigt wird. Je nachdem welche Netzhalbwellen in Abhängigkeit von der Rotorlage vom Triac 5 durchgelassen werden, kann der Motor gesteuert wahlweise in die eine oder andere Drehrichtung beschleunigt werden.

Die Augenblickswerte der Netzspannung können entweder durch direktes Messen mit Hilfe des Netzspannungssensors 3 oder in einer alternativen Ausführungsform rechnerisch aus den Null-Durchgängen und der Polarität der Spannung und der bis zu einem bestimmten darauffolgenden Zeitpunkt vergangenen Zeit bestimmt werden.

Desweiteren kann durch eine entsprechende, an sich bekannte Ausbildung des Rotorlagesensors und ein Zeitglied auch die Drehrichtung und die Drehzahl des Rotors abgeleitet werden.

Die Zündschaltung kann nun aus den Meßwerten der momentanen Netzspannung, der Rotorlage und der Drehzahl bzw. der Drehrichtung ableiten, wann der Triac 5 gezündet werden soll um bis zum Verlöschen des Triacs ein mittleres Moment in der vorgegebenen Richtung zu bewirken.

Die Drehzahl des Rotors ist insbesondere dann von Bedeutung, wenn der Motor 1 mit übersynchroner Drehzahl betrieben wird. Dies kann z.B. dadurch bewerkstelligt werden, daß bestimmte Netzhalbwellen, welche den Rotor nach dem Beschleunigen durch eine vorhergehende Halbwelle wieder in die synchrone Drehzahl abbremsen würden, vom Triac 5 nicht durchgeschaltet werden. Nach einem Beschleunigungsstoß durch eine Halbwelle werden daher in Abhängigkeit von der momentanen Drehzahl eine oder mehrere Halbwellen nicht durchgeschaltet, worauf eine in Bezug auf die Polarität und Spannung des Netzes sowie die Rotorstellung geeignete Halbwelle oder auch nur ein Teil dieser eine weitere Beschleunigung des Rotors bewirkt. Dies erfolgt solange, bis wieder Gleichgewicht zwischen dem mittleren Beschleunigungsmoment und Belastungsmoment hergestellt ist.

Um gemäß der Erfindung den optimalen Zündzeitpunkt zu bestimmen, sind in der Zündschaltung der Zusammenhang zwischen momentaner Netzspannung, Rotorlage, Drehzahl und Zündwinkel für den gegebenen Motortypen gespeichert, so daß der optimale Zündzeitpunkt bzw. Zündwinkel aus den gegebenen Parameterwerten Rotorlage, Drehzahl und Netzspannung abgeleitet werden kann.

Dieser gespeicherte Zusammenhang kann empirisch, z.B. meßtechnisch oder durch Simulation des Motors, bestimmt werden.

Die erfindungsgemäße Vorrichtung ist jedoch nicht nur zum Beschleunigen von Synchronmotoren 1 aus dem Stillstand in den Synchronismus geeignet, sondern es ist auch möglich, eine nicht im Synchronismus laufende Maschine 1 in Drehrichtung bis zum Synchronismus zu beschleunigen. Ein Betriebszustand, in dem die Synchronmaschine 1 nicht im Synchronismus läuft, kann beispielsweise dadurch entstehen, daß sie entweder durch einen Belastungsstoß aus dem Synchronismus kippt, oder daß sich durch Ausschalten von Hand oder durch einen Ausfall der Netzversorgung die Drehzahl der Synchronmaschine 1 verringert hat.

Dies stellt einen besonderen Vorteil der Erfindung gegenüber dem Stand der Technik dar, bei dem eine nicht im Synchronismus laufende Maschine üblicherweise erst bis zum Stillstand abgebremst werden muß, bevor sie wieder beschleunigt werden kann.

Um ein Weiterlaufen der Synchronmaschine 1 nach einem Spannungsausfall in die richtige Richtung zu sichern, kann in einer Ausführungsform ein Speicher für die Drehrichtung vorgesehen sein, so daß die Maschine 1 anschließend wieder in die gleiche Drehrichtung beschleunigt wird.

Die erfindungsgemäße Vorrichtung kann auch so betrieben werden, daß eine laufende Synchronmaschine 1 durch entsprechendes Zünden des Triacs 5, durch das ein Bremsmoment auf die Maschine 1 aufgebracht wird, gegebenenfalls bis in den Stillstand abgebremst und anschließend in Gegenrichtung bis zum Synchronismus wieder beschleunigt wird.

In jedem Fall ist durch die erfindungsgemäße Vorrichtung und das erfindungsgemäße Verfahren aber gewährleistet, daß beim Beschleunigen der Synchronmaschine in den Synchronismus die Hochlaufgeschwindigkeit durch die Zündschaltung so begrenzt wird, daß unabhängig vom Trägheitsmoment und Belastungsmoment, das natürlich kleiner als das mittlere Moment des Motors sein muß, ein regulärer Hochlauf der Synchronmaschine zustande kommt.

In den Fig. 2 bis 5 sind Spannungs- (Fig. 2), Strom- (Fig. 3) Rotorlage- (Fig. 4) und Drehzahlverlauf (Fig. 5) bei einem Beschleunigen einer Synchronmaschine 1 mit relativ großem Trägheitsmoment dargestellt.

Zu Beginn des Hochlaufes (0 bis 0,05 sek) werden nur Netzperioden einer Polarität auf den Motor geschaltet, wodurch der Rotor langsam beschleunigt wird. Nach den im vorliegenden Beispiel durchgeschalteten ersten drei Halbwellen werden teilweise überhaupt keine Halbwellen durchgeschaltet, da in diesen Bereichen ein weiteres Zünden des Triacs, egal welcher Netzpolarität, den Motor wieder abbremsen würde. Während des Hochlaufs kommt es wiederholt zu derartigen Pausen, die immer wieder von einigen Netzperioden gleicher Polarität abgelöst werden, bis schließlich die synchrone Drehzahl erreicht ist, in welcher der Triac dauernd durchgeschaltet ist.

Auf vergleichbare Weise kann gemäß der Erfindung auch ein Beschleunigen über die synchrone Drehzahl erfolgen, indem Netzhalbwellen, welche den Motor wieder in den Synchronismus abbremsen würden, nicht durchgeschaltet werden.

Es ist ersichtlich, daß gemäß der Erfindung auch Synchronmaschinen, welche aus dem Synchronismus - aus welchem Grund auch immer - abgebremst wurden, wieder auf einfache Weise hochfahren können, da aus dem vorgegebenen empirischen Zusammenhang zwischen Netzspannung, Rotorlage, Drehzahl und Zündwinkel der optimale Zündwinkel in jedem Betriebszustand des Motors problemlos ermittelt werden kann.

Zusammenfassend kann die Erfindung beispielsweise wie folgt dargestellt werden:

Bei dem Verfahren und der Vorrichtung zum Starten einer einphasigen Synchronmaschine 1 werden der Rotorlagewinkel 2, die Rotordrehzahl und der Augenblickswert der Netzspannung 3 ermittelt. Diese Parameter werden in einer Zündschaltung 4 mit einem vorzugsweise empirisch ermittelten Zusammenhang zwischen Netzspannung, Rotorlage, Drehzahl und optimalem Zündzeitpunkt bzw. Zündwinkel verglichen, so daß aufgrund der ermittelten Parameter der optimale Zündzeitpunkt für einen Triac 5, der zwischen eine Wechselspannungsquelle und die Statorwicklung geschaltet ist, ermittelt. Durch entsprechendes Zünden des Triacs 5 werden nur jene Netzhalbwellen auf die Synchronmaschine 1 geschaltet, welche diese in die gewünschte Drehrichtung beschleunigen.

## Patentansprüche

1. Verfahren zum Starten einer einphasigen Synchronmaschine (1), bei dem der Rotorlagewinkel und die Polarität der Netzspannung ermittelt wird und bei dem anhand der ermittelten Werte der Einschaltzeitpunkt eines Schaltelements (5), das beim Null-Durchgang des Netzstromes die Stromversorgung des Synchronmotors (1) unterbricht, so ermittelt wird, daß ein Anlauf des Synchronmotors (1) in die gewünschte Drehrichtung erfolgt, dadurch gekennzeichnet, daß der Augenblickswert der Netzspannung ermittelt wird und daß der Einschaltzeitpunkt bzw. Zündwinkel des Schaltelementes (5) aufgrund eines vorzugsweise empirisch ermittelten Zusammenhanges zwischen Netzspannung, Rotorlage und optimalem Zündzeitpunkt bzw. Zündwinkel bestimmt wird.

2. Verfahren nach Anspruch 1, dadurch gekennzeichnet, daß die Drehzahl des Rotors ermittelt wird und daß der Einschaltzeitpunkt bzw. Zündwinkel des Schaltelements (5) aufgrund eines vorzugsweise empirisch ermittelten Zusammenhanges zwischen Netzspannung, Rotorlage, Drehzahl und optimalem Zündzeitpunkt bzw. Zündwinkel bestimmt wird.

3. Verfahren nach Anspruch 1 oder 2, dadurch gekennzeichnet, daß die Augenblickswerte der Netzspannung gemessen werden.

4. Verfahren nach Anspruch 1 oder 2, dadurch gekennzeichnet, daß die Augenblickswerte der Netzspannung aus den Null-Durchgängen und der Polarität der Netzspannung und der bis zu einem bestimmten darauffolgenden Zeitpunkt vergangenen Zeit bestimmt werden.

5. Verfahren nach einem der Ansprüche 1 bis 4, dadurch gekennzeichnet, daß als Schaltelement (5) ein Triac verwendet wird.

6. Verfahren nach einem der Ansprüche 1 bis 5, dadurch gekennzeichnet, daß eine laufende Synchronmaschine (1) in Drehrichtung bis zum Synchronismus beschleunigt wird.

7. Verfahren nach einem der Ansprüche 1 bis 5, dadurch gekennzeichnet, daß eine laufende Synchronmaschine (1) bis zum Stillstand abgebremst und anschließend in Gegenrichtung bis zum Synchronismus beschleunigt wird.

8. Verfahren nach einem der Ansprüche 1 bis 6, dadurch gekennzeichnet, daß die momentane Drehrichtung der Synchronmaschine (1) gespeichert wird und daß die Synchronmaschine (1) nach einer Unterbrechung der Netzspannung wieder in der gespeicherten Drehrichtung in den Synchronismus beschleunigt wird.

9. Verfahren nach einem der Ansprüche 2 bis 8, dadurch gekennzeichnet, daß die Synchronmaschine (1) über die Synchrondrehzahl beschleunigt wird.

10. Vorrichtung zum Starten einer einphasigen Synchronmaschine (1) mit einem Sensor (2) für den Rotorlagewinkel, mit einer Einrichtung (3) zum Ermitteln der Polarität der Netzspannung, mit einem Schaltelement (5), das in einer Leitung (6) zwischen der Statorwicklung und der Wechselstromquelle angeordnet ist und das beim Null-Durchgang des Stromes die Leitung (6) unterbricht, und mit einer Zündschaltung (4) für das Schaltelement (5), dadurch gekennzeichnet, daß eine Einrichtung (3) zum Ermitteln der Augenblickswerte der Netzspannung und ein Speicher vorgesehen ist, in dem ein vorzugsweise empirisch ermittelter Zusammenhang zwischen Netzspannung, Rotorlage und optimalem Zündzeitpunkt bzw. Zündwinkel gespeichert ist und daß die Zündschaltung (4) anhand der ermittelten Werte der Netzspannung und des Rotorlagewinkels den Zündzeitpunkt bzw. Zündwinkel des Schaltelementes so wählt, daß ein Beschleunigen der Synchronmaschine (1) in die gewünschte Drehrichtung erfolgt.

11. Vorrichtung nach Anspruch 10, dadurch gekennzeichnet, daß das Schaltelement (5) ein Triac ist.

12. Vorrichtung nach Anspruch 10 oder 11, dadurch gekennzeichnet, daß die Einrichtung (3) zum Ermitteln des Augenblickswertes der Höhe der Netzspannung eine Spannungsmeßeinrichtung ist.

13. Vorrichtung nach der Anspruch 10 oder 11, dadurch gekennzeichnet, daß die Zündschaltung (4) den Augenblickswert der Netzspannung aufgrund der ermittelten Null-Durchgänge und der Polarität dieser berechnet.

14. Vorrichtung nach einem der Ansprüche 10 bis 13, dadurch gekennzeichnet, daß in der Zündschaltung (4) ein vorzugsweise empirisch ermittelter Zusammenhang zwischen Netzspannung, Rotorlage, Drehzahl und optimalem Zündzeitpunkt und Zündwinkel gespeichert ist.

15. Vorrichtung nach einem der Ansprüche 10 bis 14, dadurch gekennzeichnet, daß ein Speicher für die vor einer Unterbrechung der Stromzufuhr vorhandene Drehrichtung vorgesehen ist.
